## Europäisches Patentamt
## European Patent Office
## Office européen des brevets

(11) Veröffentlichungsnummer: **0 000 877**
**B1**

(12) **EUROPÄISCHE PATENTSCHRIFT**

(45) Veröffentlichungstag der Patentschrift: **18.05.83**

(51) Int. Cl.³: **B 25 J 11/00**

(21) Anmeldenummer: **78100560.8**

(22) Anmeldetag: **01.08.78**

(54) **Manipulator zum Positionieren von Werkstücken oder anderen Lasten.**

(30) Priorität: 31.08.77 DE 2739136
20.09.77 DE 2742163
08.10.77 DE 2745404
03.04.78 DE 2814228

(43) Veröffentlichungstag der Anmeldung:
07.03.79 Patentblatt 79/5

(45) Bekanntmachung des Hinweises auf die Patenterteilung:
18.05.83 Patentblatt 83/20

(84) Benannte Vertragsstaaten:
BE CH DE FR GB NL SE

(56) Entgegenhaltungen:
DE - A - 1 456 421
DE - A - 2 047 169
DE - A - 2 420 240
DE - A - 2 519 782
FR - A - 1 444 179
FR - A - 1 508 128
FR - A - 1 551 366
FR - A - 2 030 203
FR - A - 2 187 071
FR - A - 2 324 407

(73) Patentinhaber: Grisebach, Hans-Theodor
Kampstrasse 7
D-4750 Unna (DE)

(72) Erfinder: Grisebach, Hans-Th.
Kampstrasse 7
D-4750 Unna (DE)
Erfinder: Betzing, Rudolf
Vogelherd 3
D-5800 Hagen (DE)
Erfinder: Betzing, Volker
Vogelherd 3
D-5800 Hagen (DE)
Erfinder: Betzing, Klaus
Vogelherd 3
D-5800 Hagen (DE)
Erfinder: Betzing, Ulrich
Vogelherd 3
D-5800 Hagen (DE)

(74) Vertreter: Seibert, Rudolf, Dipl.-Ing.
Tattenbachstrasse 9
D-8000 München 22 (DE)

Courier Press, Leamington Spa, England.

**0 000 877**

(56) Entgegenhaltungen:
GB - A - 643 863
GB - A - 802 506
US - A - 1 903 916
US - A - 2 398 841
US - A - 2 910 883
US - A - 3 247 978
US - A - 3 665 148
US - A - 3 668 498
US - A - 3 743 909
US - A - 3 834 557
US - A - 4 015 721
US - A - 4 042 122

## Manipulator zum Positionieren von Werkstücken oder anderen Lasten

Die Erfindung bezieht sich auf einen Manipulator zum Positionieren von Werkstücken oder anderen Lasten mit Hilfe eines Schwenkbaren Auslegerarmes. An dem Auslegerarm ist winkelsteif ein Hubgerät und an diesem sind Lasthalteorgane angeordnet.

Manipulatoren dieser Art sollen Werkstücke erfassen und an einen vorbestimmten Ort bewegen, z. B. von einer Werkzeugmaschine zu einer anderen oder aber von einem Vorratsstapel in eine Bearbeitungsmaschine oder zurück.

Viele Arbetisvorgänge können aus Rationalisierungsgründen nicht mehr vom Menschen ausgeführt werden und viele können aufgrund des Gewichtes oder anderer Umstände nur mit Hilfe maschineller Mittel positioniert werden.

Manipulatoren sollen in einem möglichst weiten industriellen Bereich derartige Aufgaben übernehmen.

Est ist ein Manipulator gemäß dem Oberbegriff des Patentanspruchs 1 bekannt (DE—A— 14 56 421), der zum Positionieren von Werkstücken im Gießereibetrieb einen schwenkbaren Auslegerarm aufweist, an dem winkelsteif ein Hubgerät angeordnet ist und an diesem Lasthalteorgane, sowie Mittel zur steuerbaren Abstandsveränderung der Lasthalteorgane von der Schwenkachse des Auslegerarmes vorgesehen sind.

Bei diesem Manipulator ist der Auslegerarm an einem· in vertikaler Ebene schwenkbaren Zuggestänge aufgehängt, wobei der Angriffspunkt dieses Zuggestänges an dem Auslegerarm verschiebbar und der Auslegerarm selbst über ein Schubgetriebe verlängerbar ist. Die am Ende des Auslegerarmes über ein Zahnstangengetriebe heb- und senkbaren Lasthalteorgane weisen Einstellmittel zur Veränderung der Winkel und/oder Abstandpositionen von der heb- und senkbaren Zahnstange auf. Ein derartiges für ganz bestimmte Zwecke innerhalb eines Gießereibetriebes konzipiertes Gerät, hat nur begrenzte Anwendungsmöglichkeiten, läßt nur manuelle Betätigung zu und führt zu einem recht komplizierten konstruktiven Aufbau.

Es ist auch ein ortsfest angeschlagener Auslegerarm, in der Länge über ein Gelenk unterteilt, bekannt (DE—A—24 20 240).

Hier schwenkt der Auslegerarm und dessen äßerer Teilarm gegenüber diesem um horizontale Achsen innerhalb einer vertikalen Ebene.

Geräte dieser Art lassen sich nur innerhalb eines engen Anwendungsbereiches einsetzen.

Auch ist ein Manipulator mit einem winkelsteif von einer Säule ausgehenden Auslegerarm bekannt (US—A—4 042 122), bei dem der Auslegerarm durch Längsverschiebung verlängerbar ist und an dessen Ende sich ein winkelsteif, vorzugsweise ·· vertikal erstreckendes nicht verlängerbares Organ befindet, an dem schwenkbar ein Lasthalteorgan angeordnet ist.

Geräte dieser Art haben ebenfalls nur begrenzte Anwendungsmöglichkeiten und erfordern einen erheblichen zusätzlichen technischen Aufwand, wenn sie für Aufgaben eingesetzt werden sollen, für die sie ursprünglich nicht vorgesehen sind. Teleskopierbare Auslegerarme haben im übrigen Nachteile in bezug auf die Schwingungsempfindlichkeit und die Biegebeanspruchung bei größeren Lasten. Ein sogenannter Schlittenmanipulator ist aus (US—A—3 665 148) bekannt, bei dem der Auslegerarm ebenfalls winkelsteif zur Hubsäule jedoch gegenüber dieser heb- und senkbar angeordnet ist und an seinem Ende winkelsteif ein Schweißgerät trägt.

Auch dieses Gerät entbehrt der universellen Einsatzfähigkeit.

Die Relativbewegung bei Manipulatoren eines inneren und eines äußeren Teleskopteils durch Kugelschraubengetriebe zu bewirken, ist auch bekannt (DE—A—2 519 782).

Es sind lasthalteorgane bekannt (US—A—3 247 978), die mit einem Spindeltrieb das Öffnen und Schließen der Spannzangen bewirken.

Der konstruktive Aufbau dieser Spannzangen und die gewählte Kinematik lassen jedoch eine feinfühlige Steuerung der Spannzangenkräfte nicht zu.

Die Zusammenfassung von zwei Spannzangen an einem Lasthalteorgan ist bekannt (US—A—4 015 721). Über Motor und Getriebe wird eine Welle gedreht an der T-balkenartig ein Träger der Lasthalteorgane angeordnet ist, wobei diese aus zwei an den Enden des Trägers angeordneten gleichgerichteten Spannzangen bestehen.

Eine solche Lösung ist vorteilhaft, muß jedoch anders gestaltet sein, um die vielfältigen Aufgabenstellungen eines Manipulators optimal zu lösen.

Unter Ausnutzung einiger im vorbeschriebenen Stand der Technik erwähnten Gedanken sucht die Erfindung eine optimale Lösung, für einen Manipulator der innerhalb eines möglichst großvolumigen Raumes beispielsweise eines Hohlzylinders möglichst großer vertikaler Höhe ohne von in diesem Raum befindlichen Hindernissen gestört zu werden, Lasten von einem Punkt zu einem anderen bewegt und präzise positioniert.

Dies löst die Erfindung dadurch, daß die Schwenkachse des Auslegerarmes im wesentlichen vertikal angeordnet ist und dieser ein Gelenk mit steuerbaren Bremse zugeordnet ist, daß das Hubgerät aus einem gegenüber dem Auslegerarm in Richtung der Längsachse des Hubgerätes verscheibbaren äußeren Teleskopteil und mindestens einem axial gegenüber dem äußeren Teleskopteil durch eine Kugelschraubengetriebe verschiebbaren inneren Teleskopteil

besteht, daß an dem freien Ende des Hubgerätes ein Anschlußblock um die Längsachse des Hubgerätes drehbar angeordnet ist, welcher Anschlußflächen aufweist, zwischen denen und den Lasthalteorganen mindestens ein Abstandelement angeordnet ist, an dem die Lasthalteorgane dreh- und/oder schwenkbar angeordnet sind und im Abstandselement Antriebsmittel für diese Bewegungen vorgesehen sind.

Die durch die Erfindung erreichten Vorteile sind im wesentlichen darin zu sehen, daß ein winkelsteif um ein Gelenk mit vertikaler Achse schwenkbarer Auslegerarm eine annähernd schwingungsfreie und weitgehend biegungsfreie Konstruktion ermöglicht. Der von dem winkelsteif am Ende des Auslegerarmes befestigten Hubgerät erfaßte Raum ist in der Höhe verschiebbar. Dar Last wird exzentrisch gegenüber diesem Hubgerät im Abstand erfaßt und gehalten, um so auch über Hindernisse bewegt, zu diesen abgesenkt und ggfs. hinter oder unter diese Hindernisse fassend an den Positionierort gebracht werden zu können. Dadurch wird u. a. auch die Anpaßung an verschiedene Lastbereiche ohne wesentliche Konstruktions-änderungen bei gleichbleibenden einfachem Aufbau sichergestellt.

Die vom Ende des Auslegerarmes zu tragenden Totgewichte sind niedrig, weil die Antriebsleistung für Kugelspindelgeräte aufgrund ihres hohen Wirkungsgrades kleiner dimensioniert und leichter gebaut werden können. Die Ausführung des Hubgerätes ermöglicht eine sehr leichte Bauweise und diese wiederum ermöglicht es, die Reichweite des Gerätes durch Verlängerung des Auslegerarmes zu erhöhen. Die Lasthalteorgane bewegen sich relativ zu einem beliebig in Raum fixierbaren Festpunkt, der vom freien Ende des Hubgerätes gebildet wird. Und alle Funktionen lassen sich elektrisch betätigen und steuern. Auch die Lasthalteorgane die als Spannzangen ausgebildet sein können, werden über Kugelschraubengetriebe betätigt, wobei eine besondere Ausbildung dieser Kugelschraubengetriebe für die Möglichkeit sorgt, den Anpreßdruck der Spannbacken an die Last feinfühlig innerhalb eines großen Bereiches einzustellen.

Im folgenden wird die Erfindung anhand von zeichnungen, die jeweils verschiedene Elemente und Kombinationen darstellen, näher erläutert.

Es zeigen:
Figur 1 einen Manipulator nach der Erfindung, dessen Auslegerarm an einer Wand gelenkig angeschlagen ist.
Figur 2 die Verscheibbarkeit des Hubgerätes gegenüber dem Auslegerarm des Kugelspindelgetriebes.
Figur 3 die Ansicht mit Teilschnitt einer Spannzange.
Figur 4 eine perspektivische Darstellung einer Spannzange mit drehbar Spannebene.
Figur 5 in perspektivischer Darstellung den Anschlußblock, die Abstandsmittel und die Lasthalteorgane.
Figur 6 die Einstellbarkeit der Schließebenen der Spannzangenbacken und die Anordnung der Spannzangenantriebe am Ende des Hubgerätes.
Figur 7 die Anordnung einer schwenkbaren Doppelzange mit Stromverteiler.
Figur 8 die Ausbildung eines Stromverteilers.
Figur 9 ein erfindungsgemäß ausgebildetes Hubgerät mit Endschalter.
Figur 10 eine perspektivische Darstellung eines Manipulators mit an einer Hubsäule angeschlagenem Auslegerarm bei der Positionierung eines Werkstückes in einen Ofen hinein.
Figur 11 zeigt die Möglichkeit den Auslegerarm gegenüber einer stationären Säule heb- und senkbar auszubilden, sowie die Lagerung des äußeren Auslegerteilarmes unterhalb des inneren, um einen größeren Schwenkbereich und einen größeren Freiraum zu erzielen.
Figur 12 zeigt eine Draufsicht zu Figur 10.
Figur 13 zeigt die Seitenansicht eines Manipulators, bei dem die Teilarme getrennt mit Hubgeräten versehen, jeweils relativ zueinander und zum Aufhängungspunkt vertikal verschiebbar sind.

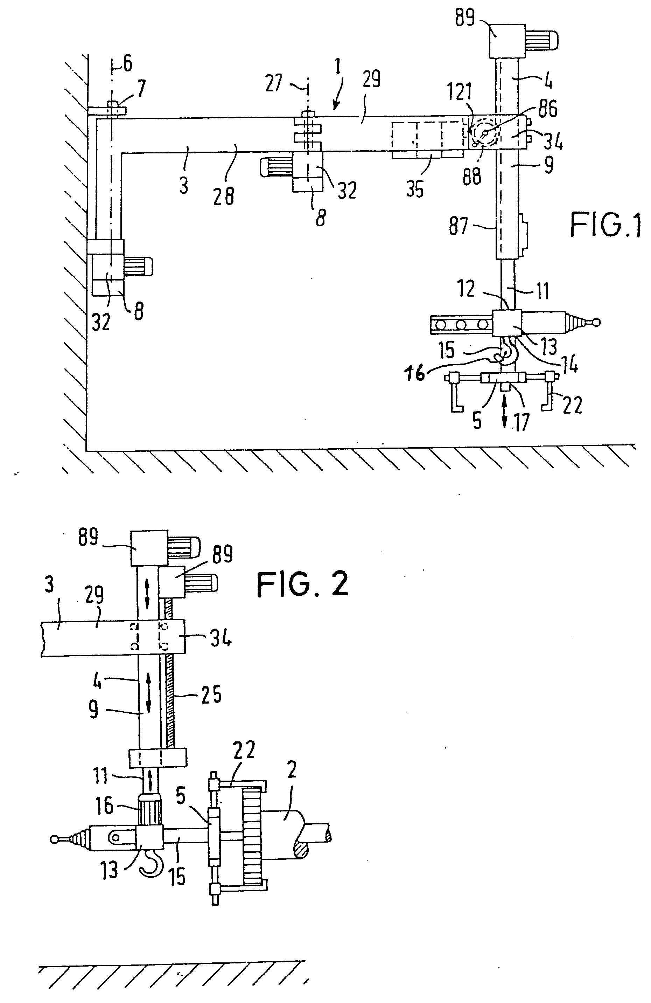

Der erfindungsgemäße Manipulator 1 nach Figur 1 weist einen Auslegerarm 3 auf, der über eine vertikale Schwenkachse 6 im Gelenk 7 in horizontaler Ebene schwenkbar aufgehängt ist, wobei diesem Gelenk eine steuerbare Bremse 8 und ein Schwenkwerk 32 zugeordnet ist. Ein innerer Teilarm 28 ist über ein Zwischengelenk 26 mit dem äußeren Teilarm 29 verbunden, wobei dem Zwischengelenk ebenfalls ein Schwenkwerk 32 und eine steuerbare Bremse 8 sowie die vertikale Achse 27 zugeordnet sind. Am freien Ende 34 des Auslegerarmes 3 ist ein Schwenkgelenk 121 vorgesehen, so daß dieses Ende gemeinsam mit dem Hubgerät 4 propellerartig um den Auslegerarm 3 schwenken kann. Das zugehörige Propellerschwenkwerk 35 ist in den hohlen Träger des äußeren Teilarmes 29 eingelassen, um Freiraum zu schaffen. Das freie Ende 34 des Auslegerarmes 3 umschließt das Hubgerät 4, das über eine Stellvorrichtung 86 (Verzahnung 87, Zahnrad 88) vertikal in der Höhe einstellbar ist. Das als Kugelspindelhubgerät ausgebildete Hubgerät 4 trägt einen Antrieb 89 zur Drehung einer Kugelspindel, über deren Mutter das innere Teleskopteil 11 gegenüber dem äußeren Teleskopteil 9 relativ verschieblich ist. Am freien Ende 12 des Hubgerätes 4 ist drehbar ein Anschlußblock 13 angeordnet, an dessen Anschlußflächen 14, Abstandsmittel 15 angeschlossen sind, in denen die Lasthalteorgane 5 dreh- und/oder schwenkbar gelagert und in denen für die Dreh- und/oder Schwenkbewegungen Antriebsmittel 16 vorgesehen sind. Die Lasthalteorgane 5 können Spannzangen 17 oder dgl. sein. Ergänzend hierzu zeigt die Figur 2 die Höhenverschieblichkeit des Hubgerätes 4 durch die Ver-

schiebung des äußeren Teleskopteiles 9 gegenüber dem Auslegerarm 3, bzw. dem äußeren Teilarm 29 mit Hilfe eines weiteren Kugelspindelhubgerätes 25 mit Antrieb 89. Mit Hilfe eines derartigen zusätzlichen Kugelspindelhubgerätes können die Hubgeschwindigkeit und die Hubhöhe erheblich vergrößert werden.

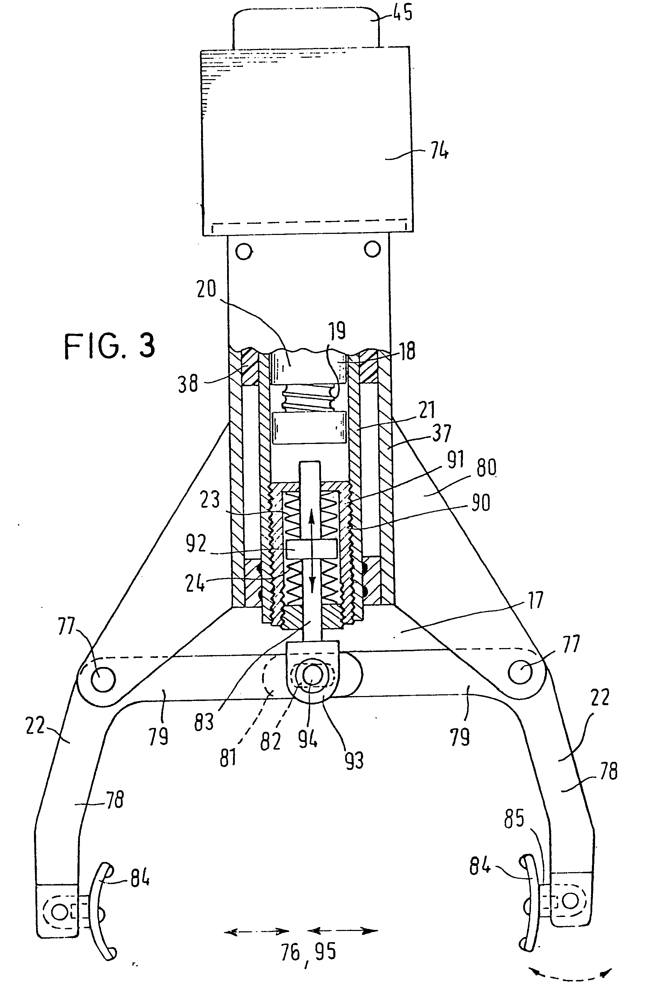

Figur 3 zeigt eine Spannzange 17 in vereinfachter Darstellung. Der Antriebsmotor 74 bewegt ein Schraubengetriebe 18, das aus einer Kugelspindel 19 und einer Kugelumlaufmutter 20 besteht. Die Kugelspindel 19 ist drehbar innerhalb der Kugelumlaufmutter 20 gelagert. Die Kugelumlaufmutter 20 ist mit dem Stößel 21 verbunden und trägt einen Gleitstein 38, der innerhalb des unrunden Außenrohres 37 drehsicher geführt ist und zusätzlich als Dämpfungsglied für rotatorische Kräfte dient. Der Stößel 21 trägt auswechselbar, über Gewinde 90 einen Einsatz 91 in dem Tellerfederpakete 23, 24 so angeordnet sind, daß ein im öffnenden Sinne wirkendes Tellerfederpaket 23 einem im schließenden Sinne wirkenden Tellerfederpaket 24 entgegenwirkt. Zwischen den Tellerfederpaketen 23, 24 ist das Anschlußteil 83 über einen Flansch 92 eingespannt. Das Anschlußteil 83 umfaßt mit einer Gabel 93 die Enden 81 der Schenkel 79, die mit den freien Schenkeln 78 die Spannzangenarme 22 bilden. Diese sind in den Schnittpunkten 77 an dem Träger 80 gelagert. Ein Lagerbolzen 94 durchgreift die Langlöcher 82.

An den Schenkeln 78 sind die Spannbacken 84 von einer nach innen gerichteten Stellung in eine nach außen gerichtete Stellung um etwa 180° schwenkbar und um Kugellager 85 drehbar.

Durch die Verspannung der Tellerfederpakete 23, 24 ist es möglich, die Anpreßspannung der Spannbacken 84 an das Werkstück 2 einzustellen. Der Spannweg wird durch das von der Kugelspindel 19 bzw. deren Antriebsmotor 74 aufgebrachten Drehmoment bestimmt. Dieses Drehmoment ist auf elektrischem Wege feinfühlig einstellbar. Auf die Spindel bzw. auf den Rotor des elektrischen Antriebsmotors 74 wirkt eine Ruhestrombremse 45, die automatisch bei Stromausfall einfällt. Die Kugelumlaufmutter 20 hält bei stehender Kugelspindel 19 den Stößel 21 fest, so daß die Verspannung der Tellerfederpakete 23, 24 erhalten bleibt und somit die Last bei Stromausfall nicht losgelassen wird. Bei bekannten Spannzangen tritt häufig der Nachteil ein, daß bei Deformationen des Werkstückes bzw. der Last die Spannzangen 22 bewegt werden und sich dadurch die Andruckkraft verringert. Dies führt zum Herunterfallen der Last und zu Unfällen. Als besonders vorteilhafte Sicherheitsmaßnahme ist in die elektronische Steuerung der Spannzangen 17 ein Zeitglied eingeschaltet, mit dem erreicht wird, daß der Motor erst dann abschaltet, wenn die Ruhestrombremse 45 bereits eingefallen ist, so daß diese mit Sicherheit bereits hält, wenn das Drehmoment des Motors nachläßt. Eine Einstellung der Spannkraft der Spannbacken 84 kann über eine Meß- oder Stellvorrichtung erfolgen, die sich an dem Spannweg der Tellerfederpakete orientiert.

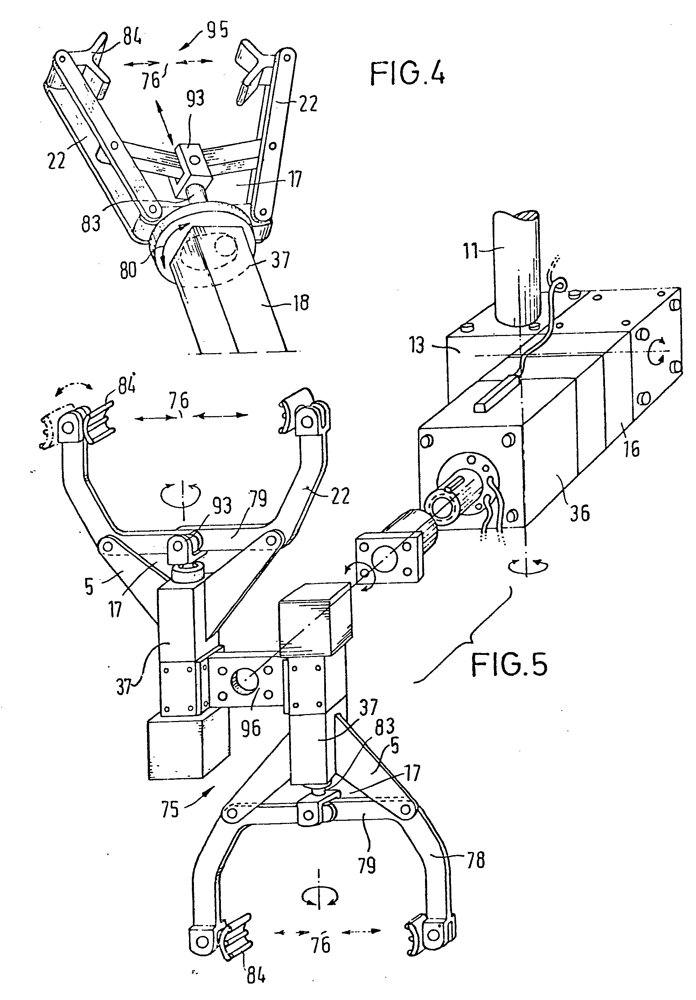

Es kann gelegentlich von Vorteil sein, die Spannebene 95 im Bereich der Spannöffnung 76 einstellbar zu machen, wie dies Figur 4 zeigt, bei der die Spannzangenarme 22 an einem Träger 80 befestigt sind, der seinerseits gegenüber dem unrunden Außenrohr 37 des zugehörigen Schraubengetriebes 18 drehbar gelagert ist.

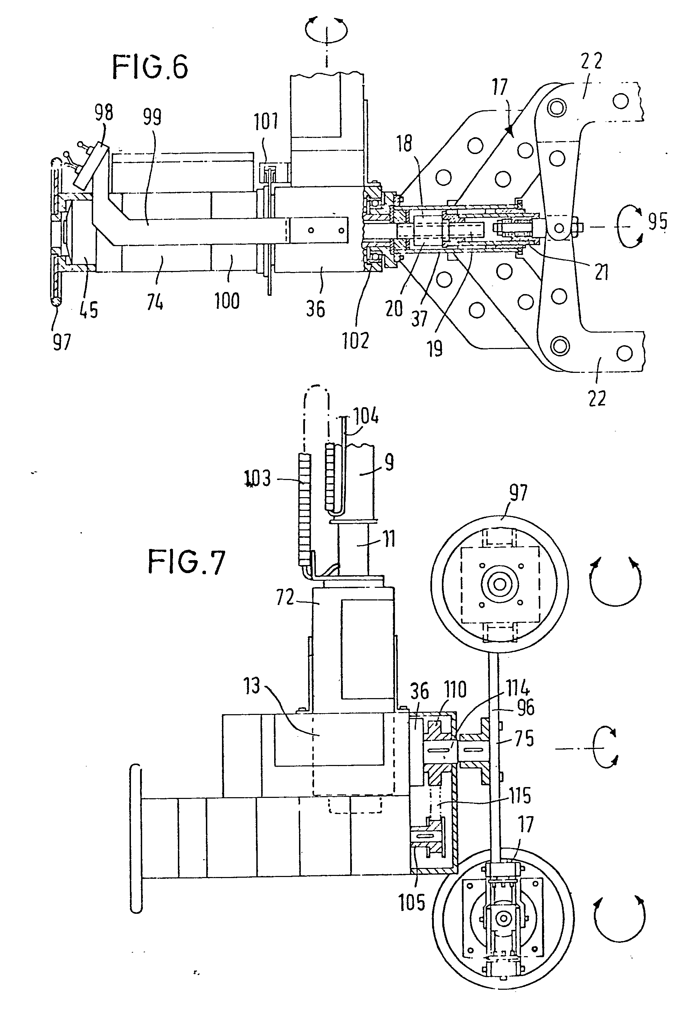

Wie in Figur 5 gezeigt, können die Spannzangen 17 zu einer Spannzangeneinheit 75 zusammengefaßt sein, wobei sich beispielsweise die unrunden Außenrohre 37 überlappen können, mit denen sie an einem Trägerkörper 96 angeschlossen sind. Eine derartige Ausführung eignet sich insbesondere zur rationellen Handhabung von Werkstücken in Bearbeitungsmaschinen, um das Fertigteil aufzunehmen und gleich darauf das Rohteil wieder einsetzen zu können.

Die Figur 6 zeigt eine Spannzange 17, die wie beispielsweise in Figur 1 gezeigt, angeordnet sein kann in einer detaillierten Darstellung. Die Spannebene 95 der Spannbacken 22 ist über das Handrad 97 um eine gedachte Längsachse verdrehbar und kann über die Scheibenbremse 101 fixiert werden. Zugeordnete Antriebsmittel können eine Verdrehung (siehe Pfeil) um eine weitere Achse bewirken. Der Spannantrieb für die Spannzange 17 besteht aus dem Steuerpult 98, dem Leitungskanal 99, dem Antriebsmotor 74, dem Getriebe 100, dem Stromverteiler 36 sowie der Lagerung 102.

Die Figur 7 zeigt eine Anordnung nach Figur 5, jedoch mit Spannzangen gemäß Figur 6. Am inneren Teleskopteil 11 ist der gestrichelt angedeutete Anschlußblock 13 über Antriebsmittel des Schwenkantriebes 72 drehbar angeschlossen. Eine Kabelkette 103 mit Kabelstrang 104 überbrückt den veränderlichen Abstand zwischen den Antriebsmitteln 16 und dem äußeren Teleskopteil 9. Die Spannzangeneinheit 75 ist mit der Achse 114 des Stromverteilers 36 gekuppelt. Auf der Achse 114 sitzt ein Antriebsritzel 110, das von einem Zahnreimen oder einer Kette 115 über das Zahnritzel 105 mit Hilfe weiterer Antriebsmittel im gezeigten Falle in vertikaler Ebene schwenkbar ist.

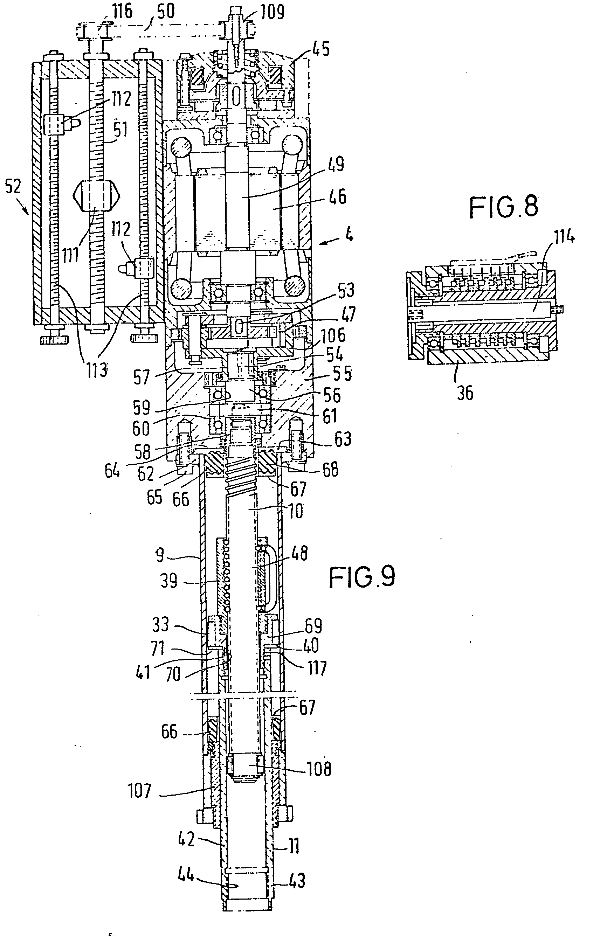

Die Figur 8 ergänzt die Erläuterungen zu den Figuren 5 und 6. Der Stromverteiler 36 ist im Schnitt dargestellt.

Die Figur 9 zeigt ein Hubgerät 4, wie es bereits in Figur 1 dargestellt ist, in einer bevorzugten Ausführungsform.

Die Läuferwelle 49 eines Elektromotors 46 ist über eine Läferwellensteckverbindung 53 mit dem Sonnenrad eines Planetengetriebes 47 verbunden, während der Planetenträger 106 des Getriebes über eine Zwischenwellensteckverbindung 54 mit einer im Lagerkörper 55 zug-und druckfest gelagerten Zwischenwelle 56 gekoppelt ist. Diese Zwischenwellensteckverbindung 54 wird von einem Steckzapfeh 57 gebildet, der in die Zwischenwelle 56 greift, die zu beiden Seiten des Ansatzes 61 gelagert ist. Die Innenringe 59 des Wäzlagers 60 spannen den Ansatz 61 ein. Die Kugelspindel 48 des Kugelschraubengetriebes 10 ist in die Gewindebuchse 58 der Zwischenwelle 56 eingesetzt und somit über diese in den Kugellagern 60 gelagert. Auf de Kugelspindel 48 sitzt die Kugelmutter 39, die fest mit einem Gleitelementträger 69 verbunden ist auf dem ein Gleitelement 33 aus dämpfungselastischem Material befestigt und formschlüssig innerhalb des äußeren Teleskopteiles 9 gleitend geführt ist. Der Gleitelementträger 69 ist mit dem Innengewinde 70 des inneren Endes 40 des inneren Teleskopteiles 11 und mit der Kugelmutter 39 verschraubt. Das auf dem Gleitelementträger 69 aufgesteckte Gleitelement 33 ist gegen eine Scheibe 71 verspannt, die zwischen dem Gleitelementträger 69 und dem inneren Ende 40 des inneren Teleskopteiles 11 angeordnet ist.

Auf dem Gleitelementträger 69 bzw. auf dessen Außengewinde 117 ist mit dem Anschlußgewinde 41 ein kreisrundes Rohr 42 als inneres Teleskopteil 11 verbunden.

Die Kugelmutter 39 des Hubgerätes 4 ist über den Endschalter 52 so gesteuert, daß sie nicht an den Enden ihres Weges anschlagen kann. Es ist jedoch notwendig an beiden Enden des Weges Endanschläge als Dämpfungspolster 66 auszubilden.

Das äußere Teleskopteil 9 ist mit seinem Fuß 64 und Schrauben 65 innerhalb einer Ausnehmung 62 innerhalb der Stirnseite des Lagerkörpers 55 befestigt, derart, daß die Platte 63 fest gegen den Lagerkörper 55 gespannt wird. Auf der Platte 63 und zwar zwischen dieser und einer Anschlagplatte 67 ist ein Gummiteil 68 einvulkanisiert, das ein Dämpfungspolster 66 bildet.

Analog hierzu ist am anderen Ende des Weges der Kugelmutter 39 ein Dämpfungspolster 66 mit der Gleitbuchse 107 verbunden. Auch dieses Dämpfungspolster 66 trägt eine Anschlagplatte 67. Das freie Ende der Kugelspindel 48 trägt einen Gleitkopf 108, mit dem sie innerhalb des kreisrunden Rohres 42 geführt ist. Dieses trägt an seinem äußeren Ende 43 ein Anschlußinnengewinde 44 mit dem es mit Anschlußteilen verschraubt werden kann.

Die Läuferwelle 49 des Elektromotors 46 durchfaßt eine Ruhestrombremse 45 und trägt ein Ritzel 109, das über den Treibriemen 50, Antriebsrad 116, die Spindel 51, den Endschalter 52 antreibt. Der Endschalter ist um 90° gedreht dargestellt, um seine Funktion erläutern zu können. Auf der Spindel 51 läuft ein Reiter 111, der gegen die Endschalterkontakte 112 stößt, um den Elektromotor 46 abzuschalten. Die Position der Endschalterkontakte 112 kann durch die Eistellschrauben 113, auf denen die Endschalterkontakte 112 geführte sind, eingestellt werden.

Die Funktion der Ruhestrombremse 45 bedarf keiner Erläuterung.

Alle stromführenden Teile, die sich in Reichweite des Bedienungspersonals befinden, sollten auf 40—60 Volt ausgelegt sein. Dies bedingt die Verwendung von Sondermotoren bei Schwenk- und Spannzangenantrieben.

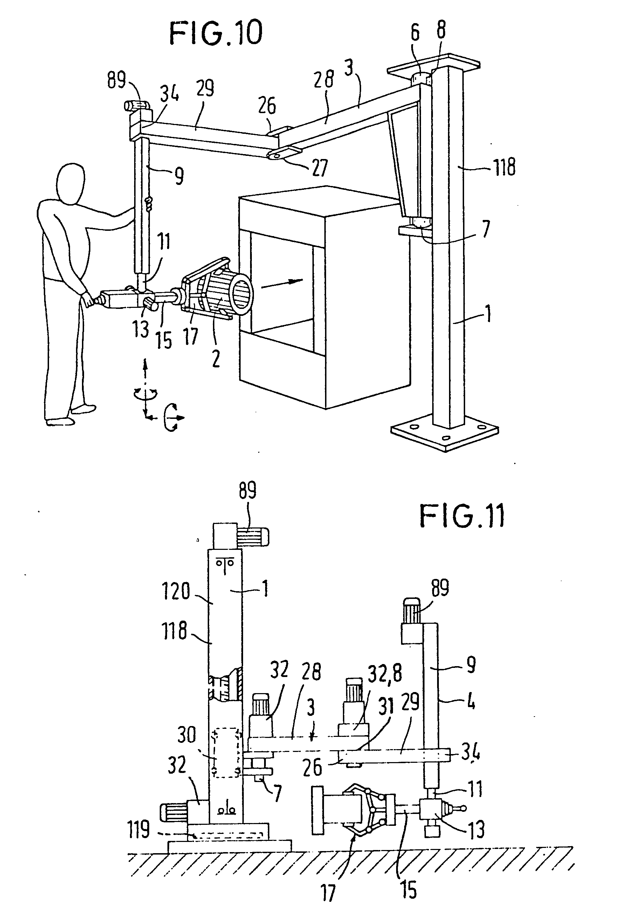

Die Zeichnung nach Figur 10 zeigt einen Manipulator 1, der im Gegensatz zu Figur 1 nicht an einer Wand sondern an einer Säule 118 aufgehängt ist.

Es handelt sich um ein handgeführtes Gerät, das beispielsweise in Ankerwickeleien- oder Elektromotorenfabriken eingesetzt werden kann. Das Werkstück 2 ist in der Spannzange 17 eingespannt und wird von dem Bedienungsmann in den Ofen in Pfeilrichtung bewegt und in diesen abgelegt.

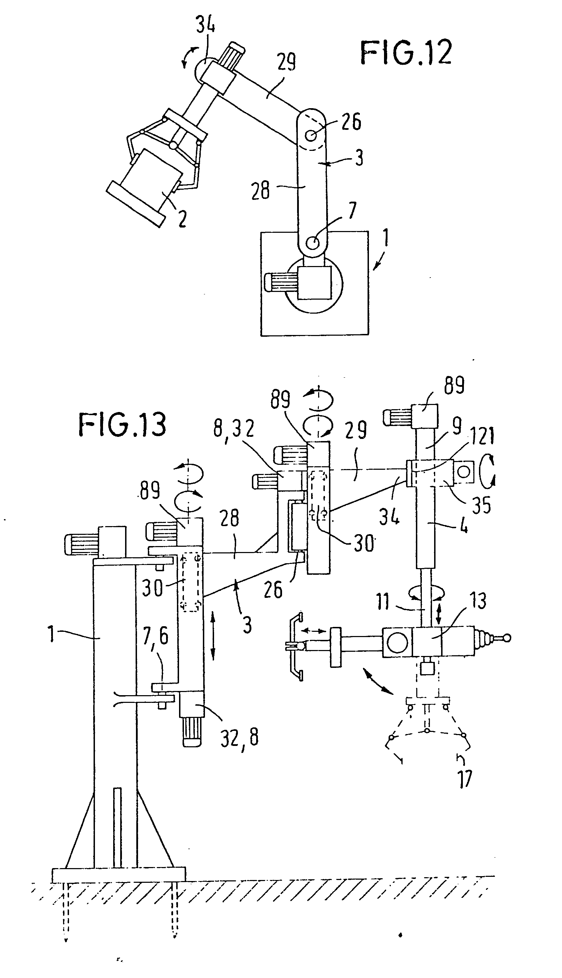

Die Figur 11 unterscheidet sich gegenüber der Ausführungsform nach Figur 1 zum Beispiel dadurch, daß der äußere Teilarm 29 unterhalb des inneren Teilarmes 28 fliegend gelagert ist, um einen möglichst großen Schwenkwinkel zu erzielen und den Raum unterhalb des Auslegerarmes 3 freizuhalten. Die Gelenke 7 und 26 (fliegende Lagerung 31) weisen zugeordnete Antriebe als Schwenkwerke 32 auf. Das Gelenk 7 ist mit einem Hubwerk 30 in der Säule 118, die als Hubsäule 120 ausgebildet ist, verbunden und kann gegenüber dieser vertikal bewegt werden. In einigen Sonderfällen kann es erforderlich sein, ein Schwenkwerk 32 auch für einen Drehkranz 119 vorzusehen, um die Hubsäule 120 gegenüber dem Fundament zu drehen.

Die Figur 12 ist eine Ergänzung zu Figur 10, in einer Ansicht von oben.

Die Figur 13 zeigt analog zu dem Hubwerk 30 in Figur 11, ein Hubwerk 30 zwischen dem inneren Teilarm 28 und dem äußeren Teilarm 29, dessen freies Ende 34 wiederum ein Schwenkgelenk 121 und ein Propellerschwenkwerk 35 aufweist. Das Hubgerät 4 ist gegenüber dem freien Ende 34 längsverschiebbar befestigt, damit das Arbeitsniveau eingestellt werden kann.

## Patentansprüche

1. Manipulator (1) zum Positionieren von Werkstücken (2) oder anderen Lasten mit Hilfe eines schwenkbaren Auslegerarmes (3), an dem winkelsteif ein Hubgerät (4) angeordnet ist, und an diesem Lasthalteorgane (5), sowie Mittel zur steuerbaren Abstandsveränderung der Lasthalteorgane (5) von der Schwenkachse (6) des Auslegerarmes (3) vorgesehen sind, dadurch gekennzeichnet, daß die Schwenkachse (6) des Auslegerarmes (3) im wesentlichen vertikal angeordnet ist und dieser ein Gelenk (7) mit steuerbarer Bremse (8) zugeordnet ist, daß das Hubgerät (4) aus einem gegenüber dem Auslegerarm (3) in Richtung der Längsachse des Hubgerätes (4) verschiebbaren äußeren Teleskopteil (9) und mindestens einem axial gegenüber dem äußeren Teleskopteil (9) durch ein Kugelschraubengetriebe (10) verschiebbaren inneren Teleskopteil (11) besteht, daß an dem freien Ende (12) des Hubgerätes (4) ein Anschlußblock (13) um die Längsachse des Hubgerätes (4) drehbar angeordnet ist, welcher Anschlußflächen (14) aufweist, zwischen denen und den Lasthalteorganen (5) mindestens ein Abstandelement (15) angeordnet ist, an dem die Lasthalteorgane (5) dreh- und/oder schwenkbar angeordnet sind und im Abstandselement (15) Antriebsmittel (16) für diese Bewegung vorgesehen sind.

2. Manipulator nach Anspruch 1, dadurch gekennzeichnet, daß die Lasthalteorgane (5) als Spannzangen (17) ausgebildet sind, für deren Antrieb ein Schraubengetriebe (18) mit angetriebener Kugelspindel (19) und Kugelumlaufmutter (20) vorgesehen ist, und zwischen dem Stößel (21) des Schraubengetriebes (18) und den Spannzangenarmen (22) ein im Öffnenden (23), sowie ein anderes im schließenden Sinne (24) auf die Spannzangenarme (22) wirkendes vorgespanntes Tellerfederpaket vorgesehen ist.

3. Manipulator nach einem der Ansprüche 1 oder 2, dadurch gekennzeichnet, daß die Verschiebbarkeit des äußeren Teleskopteiles (9) des Hubgerätes (4) gegenüber dem Auslegerarm (3) über ein weiteres Kugelspindelhubgerät (25) erfolgt.

4. Manipulator nach einem oder mehreren der Ansprüche 1 bis 3, dadurch gekennzeichnet, daß der Auslegerarm (3) über ein Zwischengelenk (26) mit vertikaler Achse (27) in einen inneren (28) und einen äußeren (29) Teilarm unterteilt ist.

5. Manipulator nach einem oder mehreren der Ansprüche 1 bis 4, dadurch gekennzeichnet, daß der Auslegerarm (3) und/oder dessen Teilarme (28, 29) über Hubwerke (30) höhenverstellbar sind.

6. Manipulator nach einem der Ansprüche 4 oder 5, dadurch gekennzeichnet, daß der äußere Teilarm (29) des Auslegerarmes (3) unterhalb des inneren Teilarmes (28) über ein Zwischengelenk (26) gelagert ist, das eine fliegende Lagerung (31) bildet, der ein Schwenkwerk (32) mit steuerbarer Bremse (8) zugeordnet ist.

7. Manipulator nach einem oder mehreren der Ansprüche 1 bis 6, dadurch gekennzeichnet, daß zwischen dem an freien Ende (34) des Auslegerarmes (3) angeordneten Hubgerät (4) und dem Auslegerarm (3) ein Propellerschwenkwerk (35) eingeschaltet ist.

8. Manipulator nach einem oder mehreren der Ansprüche 1 bis 7, dadurch gekennzeichnet, daß zwischen den drehbaren oder schwenkbaren Lasthalteorganen (5) und einem Abstandselement (15) ein Stromverteiler (36) zur Übertragung des Stromes zu den Lasthalteorganen (5) und/oder anderen Stromverbrauchern angeordnet ist.

9. Manipulator nach einem oder mehreren der Ansprüche 1 bis 8, dadurch gekennzeichnet, daß das äußere Teleskopteil (9) des Hubgerätes (4) ein unrundes Außenrohr, vorzugsweise ein Vierkantrohr ist, und daß das an den Innenflächen dieses Rohres ein Gleitelement (33) aus dämpfungselastischem Material geführt ist, das seinerseits axial unverschieblich mit einer Kugelmutter (39) und dem inneren Ende (40) des inneren Teleskopteiles (11) mittels Anschlußwinde (41) verbunden ist, daß das innere Teleskopteil (11) ein kreisrundes Rohr (42) ist, an dessen äußerem Ende (43) ein Anschlußinnengewinde (44) angeordnet ist.

10. Manipulator nach Anspruch 9, dadurch gekennzeichnet, daß zur Verschiebbarkeit des inneren Teleskopteiles (11) gegenüber dem äußeren Teleskopteil (9) ein mit einer Ruhestrombremse (45) versehener Elektromotor (46) vorgesehen ist, der über ein Planetengetriebe (47) mit der Kugelspindel (48) des Kugelschraubengetriebes (10) in Drehverbindung steht und dessen Läuferwelle (49) über einen Treibriemen (50) die Spindel (51) eines Endschalters (52) antreibt.

11. Manipulator nach Anspruch 10, dadurch gekennzeichnet, daß die Läuferwelle (49) des Elektromotors (46) über eine Läuferwellensteckverbindung (53) mit dem Planetengetriebe (47) in Verbindung steht und das Planetengetriebe (47) über eine Zwischenwellensteckverbindung (54) mit einer in einem Lagerkörper (55) zug- und druckfest gelagerten zwischen Planetengetriebe (47) und Kugelspindel (48) angeordnete Zwischenwelle (56) gegekuppelt ist, die auf ihrer Getriebeseite als Steckzapfen (57), und auf der Gegenseite als Gewindebuchse (58) ausgebildet ist sowie einen zwischen den Innenringen (59) von in dem Lagerkörper (55) angeordneten Wälzlagern (60), eingespannten Ansatz (61) aufweist.

12. Manipulator nach Anspruch 11 dadurch gekennzeichnet, daß auf der Spindelseite des Lagerkörpers (55) eine Ausnehmung (62) eine Platte (63) und den Fuß (64) des äußeren Teleskopteiles (9) aufnimmt, der mit dem Lagerkörper (55) verschraubt ist (Schrauben 65) und daß die Platte (63) Träger eines als Anschlag für die Kugelumlaufmutter (39) dienenden Dämpfungspolsters (66) ist, welches aus einem zwischen zwei Platten (Platte 63, Anschlagplatte 67) einvulkanisierten Gummiteil (68) besteht.

13. Manipulator nach einem oder mehreren der Ansprüche 9 bis 12, dadurch gekennzeichnet, daß ein Gleitelementträger (69) einerseits mit dem Innengewinde (70) des inneren Endes des inneren Teleskopteiles (11) und andererseits mit der Kugelmutter (39) verschraubt ist und daß das auf dem Gleitelementträger (69) aufgesteckte Gleitelement (33) gegen eine Scheibe (71) gespannt ist, die zwischen dem Gleitelementträger (69) und dem inneren Ende des inneren Teleskopteils (11) angeordnet ist.

14. Manipulator nach Anspruch 2, dadurch gekennzeichnet, daß dem Schraubengetriebe (18) des Lasthalteorgans (5) eine auf dessen Kugelspindel (19) wirkende Ruhestrombremse (45) zugeordnet ist, wobei diese Bremse so geschaltet ist, daß die Spindel (19) bereits gebremst ist, bevor der elektrische Antriebsmotor (74) des Schraubengetriebes (18) abgeschaltet ist, derart, daß die im schließenden Sinne auf die Spannzangenarme (22) wirkende Vorspannung der Tellerfederpakete bei abgeschaltetem elektrischen Antriebsmotor (74) beibehalten bleibt.

15. Manipulator nach Anspruch 14, dadurch gekennzeichnet, daß die Ruhestrombremse (45) eine Ruhestrommagnetbremse ist, die mit Hilfe einer vom Spannweg- und/oder der Spannkraft der Tellerfederpakete (23, 24) abhängigen Schaltung bzw. Steuerung vor Abschalten des Motors stromlos wird und damit einfällt, wobei diese Schaltung bzw. Steuerung ein zeitabhängiges Glied, enthält, derart, daß der Motor erst nach Einfall der Ruhestrombremse abschaltet.

16. Manipulator nach einem oder mehreren der Ansprüche 2 bis 14, dadurch gekennzeichnet, daß mehrere Lasthalteorgane (5) bzw. Spannzangen (17) zu einer Spannzangeneinheit (75) so miteinander verbunden sind, daß ihre Spannöffnungen (76) in verschiedene Richtungen zeigen, wobei die ihnen zugeordneten Schraubengetriebe (18) sich in ihrer Länge überlappen.

17. Manipulator nach einem oder mehreren der Ansprüche 2 bis 16 dadurch gekennzeichnet, daß wenigstens eine der Spannzangen (17) zur Einstellung ihrer Schließebenen um ihre Längsachse verdrehbar ist.

18. Manipulator nach einem oder mehreren der Ansprüche 2 bis 17, dadurch gekennzeichnet, daß eine Spannzange (17) zwei als Winkelhebel ausgebildete Spannzangenarme (22) aufweist, die jeweils im Schnittpunkt (77) ihrer freien Schenkel (78) mit den Schenkeln (79) auf einem am Schraubengetriebe (18) befestigten Träger (80) so gelagert sind, daß ihre einander zugewandten Schenkel (79) in etwa fluchten und mit in ihren Enden (81) vorgesehenen Langlöchern (82) mit dem Anschlußteil (83 des Schraubengetriebes (18) in Verbindung stehen.

19. Manipulator nach Anspruch 16 dadurch gekennzeichnet, daß die freien Schenkel (78) der Spannzangenarme (22) Spannbacken (84) tragen, die auf Kugellagern (85) drehbar gelagert und die gegenüber ihren Spannbackenarmen (22) um 180° schwenkbar und/oder umsteckbar sind.

**Revendications**

1. Manipulateur (1) pour positionner des pièces à usiner (2) ou d'autres charges à l'aide d'un bras pivotant (3) sur lequel est disposé suivant un angle fixe un appareil de levage (4), et sur celui-ci sont prévus des organes de maintien d'une charge (5), ainsi que des moyens pour modifier, d'une manière pouvant être commandée, la distance entre les organes de maintien d'une charge (5) et l'axe de pivotement (6) du bras (3), caractérisé en ce que l'axe de pivotement (6) du bras (3) est diposé sensiblement verticalement et il lui est associé une articulation (7) à frein (8) pouvant être commandé, en ce que l'appareil de levage (4) est constitué d'une partie télescopique extérieure (9) pouvant coulisser par rapport au bras (3) suivant la direction de l'axe longitudinal de l'appareil de levage (4) et d'au moins une partie télescopique intérieure (11) pouvant coulisser axialement par rapport à la partie télescopique extérieure (9) par une transmission à vis et à billes (10), en ce que à l'extrémité libre (12) de l'appareil de levage (4) est monté à rotation, par rapport à l'axe longitudinal de l'appareil de levage (4), un bloc d'assemblage (13) ayant des surfaces d'assemblage entre lesquelles et les organes de maintien de la charge (5) est interposé au moins un élément d'entretoise (15) sur lequel les organes de maintien de la charge (5) sont montés à rotation et/ou à pivotement et des moyens d'entraînement (16) pour ce mouvement sont prévus dans l'élément d'entretoise (15).

2. Manipulateur suivant la revendication 1, caractérisé en ce que les organes de maintien de la charge (5) sont agencés en pinces de serrage (17), pour l'entraînement desquelles est prévu une transmission à vis (18) comportant une broche entraînée et à billes (19) et un écrou à circulation de billes (20), et entre le poussoir (21) de la transmission à vis (18) et les bras (22) des pinces de serrage est prévu un paquet de ressorts Belleville armé au préalable et agissant sur les bras (22) des pinces de serrage dans le sens de l'ouverture (23), ainsi qu'un autre paquet agissant dans le sens de la fermeture (24).

3. Manipulateur suivant l'une des revendications 1 ou 2, caractérisé en ce que la possibilité pour la partie télescopique extérieure (9) de l'appareil de levage (4) de coulisser par rapport au bras (3) est donnée par un autre appareil de levage à broche et à billes (25).

4. Manipulateur suivant une ou plusieurs des revendications 1 à 3, caractérisé en ce que le bras (3) est subdivisé par une articulation intermédiaire (26) à axe (27) vertical en un tronçon de bras intérieur (28) et en un tronçon de bras extérieur (29).

5. Manipulateur suivant une ou plusieurs des revendications 1 à 4, caractérisé en ce que le bras (3) et/ou ses tronçons de bras (28, 29) sont réglables en hauteur par des dispositifs de levage (30).

6. Manipulateur suivant l'une des revendications 4 ou 5, caractérisé en ce que le tronçon de bras extérieur (29) du bras (3) est monté en dessous du tronçon de bras intérieur (28) par l'intermédiaire d'une articulation intermédiaire (26) qui forme un palier flottant (31) auquel est associé un mécanisme de pivotement (32) à frein pouvant être commandé.

7. Manipulateur suivant une ou plusieurs des revendications 1 à 6, caractérisé en ce qu'entre l'appareil de levage (4) disposé à l'extrémité libre (34) du bras (3) et le bras (3) est interposée une commande de pivotement (35).

8. Manipulateur suivant une ou plusieurs des revendications 1 à 7, caractérisé en ce qu'entre les organes de maintien de la charge (5), qui peuvent tourner ou qui peuvent pivoter, et un élément d'entretoise (15) est interposé un répartiteur de courant électrique (36) pour transmettre le courant électrique aux organes de maintien de la charge (5) et/ou à d'autres dispositifs consommateurs de courant électrique.

9. Manipulateur suivant une ou plusieurs des revendications 1 à 8, caractérisé en ce que la partie télescopique extérieure (9) de l'appareil de levage (4) est un tube extérieur qui n'est pas rond, de préférence un tube à quatre arêtes, et en ce que sur les surfaces intérieures de ce tube est guidé un élément glissant (33) en un matériau à élasticité d'amortissement, qui est relié, à son tour, sans possibilité de coulisser axialement, à un écrou à billes (39) et à l'extrémité intérieure (40) de la partie télescopique intérieure (11) au moyen d'un filetage d'assemblage (41), que la partie télescopique intérieure )11) est un tube rond (42) à l'extrémité extérieure (43) duquel est prévu un taraudage d'assemblage (44).

10. Manipulateur suivant la revendication 9, caractérisé en ce que donner à la partie télescopique intérieure (11) la possibilité de coulisser par rapport à la partie télescopique extérieure (9), il est prévu un moteur électrique (46) à frein en circuit fermé (45), qui est rendu solidaire en rotation de la broche à billes (48) de la transmission à vis à billes (10) par un engrenage planétaire (47) et dont l'arbre de rotor (49) entraîne la broche (51) d'un interrupteur de fin de course (52) par l'intermédiaire d'une corroie d'entraînement (50).

11. Manipulateur suivant la revendication 10, caractérisé en ce que l'arbre de rotor (49) du moteur électrique (46) est relié avec l'engrenage planétaire (47) par une liaison par emmanchement (53) de l'arbre de rotor et l'engrenage planétaire (47) est accouplé par une liaison par emmanchement d'arbre intermédiaire (54) avec un arbre intermédiaire (56) qui est monté dans un corps de palier (55) sans possibilité d'être tiré ou poussé, qui est interposé entre l'engrenage planétaire (47) et la broche à billes (48), qui est agencé en bout d'arbre d'emmanchement (57) du côté de l'engrenage et en douille filetée (58) du côté opposé et qui présente un prolongement (61) serré entre les bagues intérieures (59) de paliers à roulement (60) disposés dans le corps de palier (55).

12. Manipulateur suivant la revendication 11, caractérisé en ce que du côté broche du corps de palier (55), un évidement (62) reçoit une plaquette (63) et le pied (64) de la partie télescopique extérieure (9) qui est vissé (vis 65) sur le corps de palier (55) et en ce que la plaquette (63) est le support d'un coussin d'amortissement (66) servant de butée pour l'écrou à circulation de billes (39), ce coussin étant constitué d'une pièce en caoutchouc (68) introduite par vulcanisation entre deux plaquettes (plaquette 63, plaquette de butée 67).

13. Manipulateur suivant une ou plusieurs des revendications 9 à 12, caractérisé en ce qu'un support (69) de l'élément glissant est vissé, d'une part, dans le taraudage (70) de l'extrémité intérieure de la partie télescopique intérieure (11) et, d'autre part, dans l'écrou à billes (39) et en ce que l'élément glissant (33) enfilé sur le support (69) est bloqué contre une rondelle (71) disposée entre le support (69) de l'élément glissant et l'extrémité intérieure de la partie télescopique intérieure (11).

14. Manipulateur suivant la revendication 2, caractérisé en ce qu'à la transmission à vis (18) de l'organe de maintien de la charge (5) est associé un frein à courant de repos (45) agissant sur la broche à billes (19), ce frein étant branché de manière à ce que la broche (19) soit déjà freinée avant que le moteur électrique d'entraînement (74) de la transmission à vis (18) ne soit débranché, la réalisation étant telle que, lorsque le moteur électrique d'entraînement (74) est débranché, la tension préalable du paquet de ressorts Belleville agissant dans le sens de la fermeture sur les bras des pinces de serrage (22) est maintenue.

15. Manipulateur suivant la revendication 14, caractérisé en ce que le frein à courant de repos (45) est un frein magnétique à courant de repos qui, à l'aide d'une circuit ou d'une commande et en fonction de la course de compression et/ou de la force de compression des paquets de ressorts Belleville (23, 24), n'est plus alimenté en courant électrique et ainsi se déclenche avant le débranchement du moteur, ce circuit ou cette commande comprenant un élément de temporisation de manière que le moteur ne soit débranché qu'après le déclenchement du frein à courant de repos.

16. Manipulateur suivant une ou plusieurs des revendications 2 à 14, caractérisé en ce que plusieurs organes de maintien d'une charge (5) ou pinces de serrage (17) sont reliés entre eux en une unité de pinces de serrage (75) de manière à ce que leurs ouvertures de serrage (76) soient dirigées dans des directions différentes, les transmissions à vis (18) qui leur sont affectés se chevauchant sur leur longueur.

17. Manipulateur suivant une ou plusieurs des revendications 2 à 16, caractérisé en ce qu'au moins l'une des pinces de serrage (17) peut tourner autour de son axe longitudinal pour le réglage de ses plans de fermeture.

18. Manipulateur suivant une ou plusieurs des revendications 2 à 17, caractérisé en ce qu'une pince de serrage (17) présente deux bras (22) de pince de serrage agencés en leviers coudés, qui, au point de croisement (77) de leurs branches libres (78) avec les branches (79), sont montés sur un support (80) fixé à la transmission à vis (18) de manière à ce que leurs branches (79) dirigées l'une vers l'autre soient à peu près alignées et soient reliées par des trous oblongs percés à leurs extrémités (82) à la pièce d'assemblage (83) de la transmission à vis (18).

19. Manipulateur suivant la revendication 18, caractérisé en ce que les branches libres (78) des bras de la pince de serrage (22) portent des mâchoires de serrage (84), qui sont montées à rotation sur des paliers à billes (85) et qui peuvent pivoter de 180° par rapport à leurs bras de mâchoires de serrage (22) et/ou être inversées par enfichage.

## Claims

1. Manipulator (1) for positioning workpieces (2) or other loads with the aid of a pivotable jib (3), on which a lifting device (4) is arranged at a fixed angle and which lifting device is provided with load holding elements (5) and means which controllably change the spacing of the load holding elements (5) from the pivot axis (6) of the jib (3), characterised in that the pivot axis (6) of the jib (3) is arranged to be substantially vertical and is allocated a hinge (7) having a controllable brake (8), that the lifting device (4) consists of an outer telescopic component (9) which is displaceable in relation to the jib (3) in the direction of the longitudinal axis of the lifting device (4) and consists of at least one inner telescopic component (11) which is axially displaceable in relation to the outer telescopic component (9) by means of a ball-type worm gear (10), that at the free end (12) of the lifting device (4) is arranged a connection block (13) so as to be rotatable about the longitudinal axis of the lifting device (4), which connection block possesses connection surfaces (14), between which and the load holding elements (5) is arranged at least one spacing element (15), on which the load holding elements (5) are rotatably and/or pivotably arranged and driving means (16) for this movement are arranged in the spacing element (15).

2. Manipulator as claimed in Claim 1, characterised in that the load holding elements (5) are designed as clamping members (17), for whose actuation a worm gear (18) having a driven ball-type spindle (19) and a rotating ball-type nut (20) is provided, and between the tappet (21) of the worm gear (18) and the arms (22) of the clamping members, there is arranged a biased stack of cup springs which acts on the arms (22) of the clamping members so as to have an opening effect and another one which acts on the arms (22) of the clamping members so as to have a closing effect.

3. Manipulator as claimed in any of Claims 1 or 2, characterised in that the displaceability of the outer telescopic component (9) of the lifting device (4) relative to the jib (3) is effected by means of a further ball-type spindle lifting device (25).

4. Manipulator as claimed in one or more of Claims 1 to 3, characterised in that the jib (3) is divided into an inner (28) and an outer (29) arm section by means of an intermediate hinge (26) having a vertical axis.

5. Manipulator as claimed in one or more of Claims 1 to 4, characterised in that the jib (3) and/or its arm sections (28, 29) are adjustable in height by means of lifting mechanism (30).

6. Manipulator as claimed in one or more of Claims 1 to 4, characterised in that the outer arm section (29) of the jib (3) is mounted below the inner arm section (28) by means of an intermediate hinge (26) which forms a suspended bearing (31) which is assigned a pivot mechanism (32) having a controllable brake (8).

7. Manipulator as claimed in one or more of Claims 1 to 6, characterised in that a propeller pivot mechanism (35) is inserted between the lifting device (4) arranged at the free end (34) of the jib (3) and the jib (3).

8. Manipulator as claimed in one or more of Claims 1 to 7, characterised in that between the rotatable or pivotable load holding elements (5) and a spacing element (15) there is arranged a current distributor (36) which serves to transmit the current to the load holding elements (5) and/or other current consumers.

9. Manipulator as claimed in one or more of Claims 1 to 8, characterised in that the outer telescopic component (9) of the lifting device (4) is a non-circular external tube, preferably a rectangular tube, and that a sliding element (33) made of damping-elastic material is guided on the inner surfaces of this tube, which sliding element for its part is connected to the ball-type nut (39) and the inner end (40) of the inner telescopic component (11) by means of threaded connections (41) so as to be axially immovable, and that the inner telescopic component (11) is a circular tube (42), at whose outer end (43) is arranged a coupling in the form of an internal thread (44).

10. Manipulator as claimed in Claim 9, characterised in that in order to be able to displace the inner telescopic component (11) in relation to the outer telescopic component (9), there is provided an electromotor (46) which is provided with a steady current brake (45) and which forms a rotary connection with the ball-type spindle (48) of the ball-type worm gear (10) via a plant gear (47) and whose rotor shaft (49) actuates the spindle (51) of a limit switch (52) by means of a driving belt (50).

11. Manipulator as claimed in Claim 10, characterised in that the rotor shaft (49) of the electromotor (46) is connected to the planet gear (47) via a rotor shaft plug connection (53) and the planet gear (47) is coupled via an intermediate shaft plug connection (54) to an intermediate shaft (56) which is mounted so as to be tension and pressure-resistant and arranged between planet gear (47) and ball-type spindle (48), which intermediate shaft is designed as a plug pin on its gear side and as a thread bush (58) on the opposite side and which has an attachment (61) which is clamped between the inner rings (59) of rolling bearings (60) arranged in the bearing body (55).

12. Manipulator as claimed in Claim 11, characterised in that on the spindle side of the bearing body (55), a recess (62) accommodates a plate (63) and the base (64) of the outer telescopic component (9) which is screwed to the bearing body (55) (screws 65), and that the plate (63) acts as carrier of a damping cushion (66) which serves as stop for the rotating ball-type nut (39), which damping cushion consists of a rubber component (68) which is vulcanized between two plates (plate 63, stop plate 67).

13. Manipulator as claimed in one or more of Claims 9 to 12, characterised in that a sliding element carrier (69) is screwed to the internal thread (70) of the inner end of the inner telescopic component (11) on the one hand and to the ball-type nut (39) on the other hand, and that the sliding element (33) which is mounted on the sliding element carrier (69) is pulled away from a disc (71) which is arranged between the sliding element carrier (69) and the inner end of the inner telescopic component (11).

14. Manipulator as claimed in Claim 2, characterised in that the worm gear (18) of the load holding elements (5) is assigned a steady current brake (45) which acts upon the ball-type spindle (19), where the brake is so arranged that the spindle (19) has already been braked before the electric drive motor (74) of the worm gear (18) is switched off, in such manner that the bias of the stacks of cup springs which act upon the arms (22) of the clamping members so as to have a closing effect, is maintained when the electric drive motor (74) is switched off.

15. Manipulator as claimed in Claim 14, characterised in that the steady current brake (45) is a magnetic steady current brake which becomes currentless and is thus applied with the aid of a switching unit or control unit, which is dependent upon the clamping path and/or the clamping power of the stacks (23, 24) of cup springs, before the motor switches off, where the switching or control unit comprises a time-dependent element of such type that the motor only switches off after the application of the steady current brake.

16. Manipulator as claimed in one or more of Claims 2 to 14, characterised in that a plurality of load holding elements (5) and clamping members (17) are combined to form a clamping member unit (75) in such manner that their clamping openings (76) point in different directions, where the worm gears (18) assigned thereto overlap one another in their length.

17. Manipulator as claimed in one or more of Claims 2 to 16, characterised in that at least one of the clamping members (17) is rotatable about its longitudinal axis in order to adjust its clamping surfaces.

18. Manipulator as claimed in one or more of Claims 2 to 17, characterised in that a clamping member (17) possesses two arms (22) which are designed as angle levers and which are respectively mounted on a carrier, which is secured to the worm gear (18), in the point of intersection (77) of their free flanks (78) and the flanks (79) in such manner that their flanks (79) which face one another, are approximately in alignment and connected to the connection component (83) of the worm gear (18) by means of longitudinal holes (82) provided in their ends (81).

19. Manipulator as claimed in Claim 18, characterised in that the free flanks (78) of the arms (22) of the clamping members support clamping jaws (84) which are rotatable on ball bearings (85) and which are pivotable through 180° in relation to their arms (22) and/or are interchangeable.

FIG.1

FIG. 2

FIG. 3

2

0 000 877

FIG.4

FIG.5

3

FIG.6

FIG.7

0 000 877

FIG.8

FIG.9

# FIG.10

# FIG.11

FIG.12

FIG.13